Europäisches Patentamt

European Patent Office

Office européen des brevets

(19)

(11) Veröffentlichungsnummer: **0 025 517**
A1

## (12) EUROPÄISCHE PATENTANMELDUNG

(21) Anmeldenummer: 80104838.0

(22) Anmeldetag: 14.08.80

(51) Int. Cl.³: **G 02 F 1/133**

(30) Priorität: 14.09.79 DE 2937277

(43) Veröffentlichungstag der Anmeldung: 25.03.81
**Patentblatt 81/12**

(84) Benannte Vertragsstaaten: **FR GB IT**

(71) Anmelder: **SIEMENS AKTIENGESELLSCHAFT Berlin und München, Postfach 22 02 61, D-8000 München 22 (DE)**

(72) Erfinder: **Reichel, Ekke, Dr., Phys., Magdalenenstrasse 17, D-8000 München 19 (DE)**

(54) **Reflektiv betriebene Schadt-Helfrich-Anzeige.**

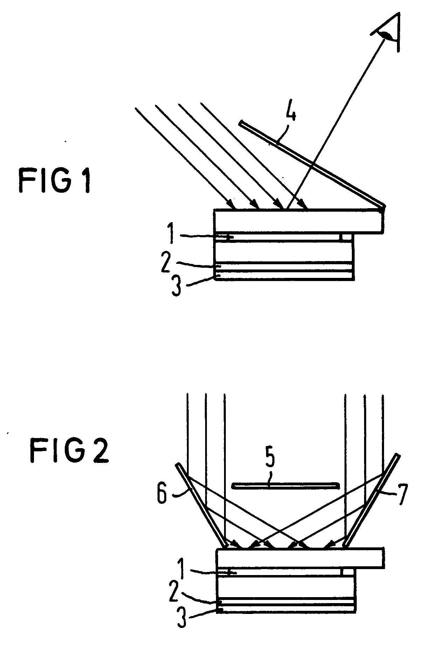

(57) Die Erfindung bezieht sich auf reflektiv betriebene Schadt-Helfrich-Anzeigen, die im angesteuerten Zustand dunkle Segmente vor hellem Hintergrund zeigen können oder umgekehrt. Bei seitlichem Lichteinfall können sich die dunklen Bereiche als Schatten auf dem Hintergrund abbilden. Die Anzeige verliert dadurch an Kontrast. Eine Verminderung der Schatten und Verbesserung des Kontrastes wird dadurch erzielt, daß wenigstens ein Teil des Analysators (4) (vorderer Polarisator) so weit von der Flüssigkristallzelle (1) entfernt angeordnet ist, daß umpolarisiertes Umgebungslicht unter Umgehung des Analysators (4) unmittelbar auf die Anzeigesegmente fällt. Die Erfindung ist beispielsweise für zeilenförmige Anzeigen geeignet (Fig. 2).

SIEMENS AKTIENGESELLSCHAFT          Unser Zeichen

Berlin und München                  VPA   79 P 1 1 5 2 EUR

### Reflektiv betriebene Schadt-Helfrich-Anzeige

Die Anmeldung bezieht sich auf eine reflektiv betriebene Schadt-Helfrich-Anzeige mit einer mit Anzeigesegmenten versehenen Flüssigkristallzelle, einem dem Betrachter zugewandten Analysator und einem auf der vom Betrachter abgewandten Seite liegenden Polarisator, sowie mit einem Reflektor.

Anzeigen dieser Art können so aufgebaut sein, daß die angesteuerten Segmente dunkel vor hellem Hintergrund oder hell vor dunklem Hintergrund erscheinen. Die dunklen angesteuerten Segmente erscheinen im Bereich der Flüssigkristallschicht. Bei schrägem Lichteinfall kann auf dem Reflektor, der sich um die Dicke der Zellenwand hinter der FK-Schicht befindet, der dunkle Bereich als störender Schatten abgebildet werden. Die Anzeigevorrichtung verliert damit an Kontrast. Besonders störend kann dies zum Beispiel bei zeilenförmigen Anzeigen mit kleinen Schriftzeichen sein, die für verschiedene Betrachtungswinkel geeignet sein müssen.

Hab 1 Dx / 12.09.1979

0025517

Dieses Problem könnte durch Verwendung von FK-Zellen mit geringen Wandstärken, das heißt geringem Abstand FK-Schicht-Polarisator-Reflektor, mit der Folge gemildert werden, daß die Ausdehnung der Schatten eingeschränkt wird. Verhindern läßt sich die Schattenbildung damit jedoch nicht.

Der Erfindung liegt die Aufgabe zugrunde, eine Schadt-Helfrich-Anzeige der oben genannten Art so weiterzubilden, daß eine Schattenbildung zumindest fast völlig unterbunden wird.

Die Erfindung ist dadurch gekennzeichnet, daß wenigstens ein Teil des Analysators so weit von der Flüssigkristallzelle entfernt angebracht ist, daß unpolarisiertes Umgebungslicht unter Umgehung des Analysators auf die Anzeigesegmente fällt.

Weiterbildungen der Erfindung sind Gegenstand der Unteransprüche.

Die Erfindung wird an Hand zweier Ausführungsbeispiele in Verbindung mit den Fig. 1 und 2 näher erläutert. Beide Figuren zeigen Seitenansichten einer Schadt-Helfrich-Anzeige gemäß der Erfindung.

In Fig. 1 ist eine FK-Zelle mit 1 bezeichnet. Auf der Rückseite der FK-Zelle 1 ist ein Polarisator 2 angebracht, an den sich ein Reflektor 3 anschließt. Auf der Vorderseite der FK-Zelle 1 ist ein Polarisator 4 an der FK-Zelle 1 schwenkbar angelenkt. Im ausgeschwenkten Zustand des Polarisators 4 fällt durch Pfeile symbolisiertes, nicht polarisiertes Licht unter Umgehung des Analysators 4 direkt auf die FK-Zelle 1. Dieses Licht geht durch die FK-Zelle 1, wird am Polarisator 2 polarisiert und durch den Reflektor 3 reflektiert. Haben Polarisator 2 und Analysator 4 gleiche Polarisationsrichtung, so erscheinen die angesteuerten Segmente hell. Haben sie gegeneinander um 90° verdrehte Polarisationsrichtungen, so erscheinen die angesteuerten Segmente dunkel in heller Umgebung. Dadurch, daß das Umgebungslicht unter Umgehung des Analysators 4 auf die FK-Zelle fällt, wird erst das reflektierte Licht polarisiert und nach dem Durchlaufen der FK-Schicht vom Analysator 4 absorbiert, so daß am Reflektor keine Schatten entstehen können. Nur bereits linear polarisiertes Licht kann vom reflektierenden Polarisator absorbiert werden und als Schatten erscheinen.

Der Analysator 4 kann an der FK-Zelle 1 derart schwenkbar angelenkt sein, daß er im Ruhezustand der Anzeige an der FK-Zelle 1 anliegt.

Die Anzeige nach Fig. 2 unterscheidet sich von der nach Fig. 1 im wesentlichen durch die Lage des Analysators, der hier mit 5 bezeichnet ist. Er liegt im Abstand von der FK-Zelle 1 und parallel zu dieser. Das durch Pfeile symbolisierte Umgebungslicht fällt hier über vor der FK-Zelle liegende, in Richtung auf die FK-Zelle reflektierende Spiegel 6, 7 auf die FK-Zelle 1. Das Licht durchläuft die FK-Zelle 1, wird vom Polarisator 2 polarisiert, durch den Reflektor 3 reflektiert und gelangt über die FK-Zelle 1 zum Analysator 5. Je nach Lage der Polarisationsebenen von Polarisator 2 und Analysator 5 erscheinen daher entsprechend wie in Verbindung mit Fig. 1 beschrieben die anzuzeigenden Segmente dunkel in heller Umgebung oder umgekehrt. Eine Abbildung von Schatten auf dem Reflektor 3 wird hier ebenfalls weitestgehend unterbunden.

0025517
79 P 1 1 5 2 EUR

Zur Verbesserung des Kontrastes sind Polarisator 2 und
Reflektor 3 möglichst nahe an die FK-Zelle 1 angeordnet.
Sie können beispielsweise aufgeklebt sein.

Die Erfindung erschöpft sich nicht in den beiden Ausführungsbeispielen, vielmehr ist die Führung des Umgebungslichts auch durch andere Mittel, beispielsweise durch
Prismen, Lichtleitern oder durch eine Kombination von
Prismen, Spiegeln oder Lichtleitern möglich.

2 Figuren
4 Patentansprüche

0025517
79 P 1 1 5 2 EUR

## Patentansprüche

1. Reflektiv betriebene Schadt-Helfrich-Anzeige mit einer mit Anzeigesegmenten versehenen Flüssigkristallzelle, einem dem Betrachter zugewandten Analysator und einem auf der vom Betrachter abgewandten Seite liegenden Polarisator, sowie mit einem Reflektor, d a d u r c h g e k e n n z e i c h n e t , daß wenigstens ein Teil des Analysators (4, 5) so weit von der Flüssigkristallzelle (1) entfernt angebracht ist, daß unpolarisiertes Umgebungslicht unter Umgehung des Analysators (4, 5) auf die Anzeigesegmente fällt.

2. Schadt-Helfrich-Anzeige nach Anspruch 1, d a - d u r c h g e k e n n z e i c h n e t , daß der Analysator (5) parallel zur Flüssigkristallzelle (1) angeordnet ist und daß vor der Flüssigkristallzelle (1) in Richtung auf sie reflektierende Spiegel (6, 7) angeordnet sind.

3. Schadt-Helfrich-Anzeige nach Anspruch 1, d a - d u r c h g e k e n n z e i c h n e t , daß der Analysator (4) in der Nähe der Flüssigkristallzelle (1) relativ zu dieser schwenkbar angeordnet und beim Anzeigen ausgeschwenkt ist.

4. Schadt-Helfrich-Anzeige nach einem der Ansprüche 1 bis 3, d a d u r c h g e k e n n z e i c h n e t , daß der Polarisator (2) mit dem Reflektor (3) auf die Flüssigkristallzelle (1) aufgeklebt ist.

FIG 1

1
2
3

4

FIG 2

5

6
7

1
2
3

**Europäisches Patentamt**

**EUROPÄISCHER RECHERCHENBERICHT**

0025517

Nummer der Anmeldung

EP 80 10 4838

| Kategorie | EINSCHLÄGIGE DOKUMENTE Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X | US - A - 3 924 932 (M. YAMAMOTO) <br> * Spalte 1, Zeilen 13-65; Spalte 3, Zeile 26 - Spalte 5, Zeile 1; Figuren 2-4 * <br> -- | 1,4 | G 02 F 1/133 |
|  | US - A - 3 857 627 (T.B. HARSCH) <br> * Zusammenfassung; Figuren 1 und 3 * <br> -- | 1,2,4 | |
|  | US - A - 3 857 628 (R.D. STRONG) <br> * Zusammenfassung; Figuren 1 und 2 * <br> ---- | 1,2,4 | **RECHERCHIERTE SACHGEBIETE (Int. Cl.³)** <br><br> G 02 F 1/133 <br> 1/137 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-12-1980 | BORMS |

EPA form 1503.1   06.78